# EUROPEAN PATENT SPECIFICATION

(11) **EP 4 371 542 B1**
(45) Date of publication and mention of the grant of the patent: **30.07.2025**
(21) Application number: 23204402.4
(22) Date of filing: 18.10.2023
(51) Int. Cl.: A61G 3/08, G06V 20/58

(54) **APPARATUS AND METHOD FOR PROVIDING CONVENIENCE FOR THE DISABLED USING WHEELCHAIR**
VORRICHTUNG UND VERFAHREN ZUR BEREITSTELLUNG VON KOMFORT FÜR BEHINDERTE MIT EINEM ROLLSTUHL
APPAREIL ET PROCÉDÉ POUR FOURNIR UNE COMMODITÉ POUR LES HANDICAPÉS UTILISANT UN FAUTEUIL ROULANT

(30) Priority: 17.11.2022 KR 20220154482; 06.12.2022 KR 20220168464
(43) Date of publication of application: 22.05.2024
(73) Proprietor: Hyundai Mobis Co., Ltd., Gangnam-gu Seoul 06141 (KR)
(72) Inventor: SHIN, Ji Soo, 16874 Yongin-si, Gyeonggi-do (KR); KIM, Seung Jae, 18466 Hwaseong-si, Gyeonggi-do (KR)
(74) Representative: Frenkel, Matthias Alexander

(56) References cited:
- DE-A1- 102019 205 419
- US-A- 4 511 171
- US-A1- 2020 031 309
- US-A1- 2020 323 713
- US-A1- 2021 369 516

## Description

### BACKGROUND OF THE DISCLOSURE

### Field of the Disclosure

Embodiments are applicable to autonomous vehicles in any field, and more specifically, for example, to vehicle systems for transportation of disabled persons, particularly disabled persons using wheelchairs.

### Discussion of the Related Art

Society of Automotive Engineers (SAE), an American automotive engineering society, subdivides autonomous driving levels into a total of six steps, for example, from level 0 to level 5, as follows.

Level 0 (No Automation) is a step in which a driver controls and is responsible for everything in driving. The driver always drives, and a system of an autonomous vehicle performs only auxiliary functions such as emergency notification, etc. At this level, a subject of driving control is human and variable detection and driving responsibilities during driving are held by the human.

Level 1 (Driver Assistance) is a step of assisting a driver through adaptive cruise control and lane keeping functions. By activating a system, a driver is assisted by maintaining a speed of an autonomous vehicle, a vehicle-to-vehicle distance, and lanes. At this level, driving control subjects are a human and a system, and both the detection of variables that occur during driving and the driving responsibility are held by the humans.

Level 2 (Partial Automation) is a step in which an autonomous vehicle and a human can control steering and acceleration/deceleration of the autonomous vehicle for a certain period of time within a specific condition. Auxiliary functions such as steering at a gentle curve and maintaining a distance from a car in front are available. However, at this level, the detection of variables during driving and the driving responsibility are held by the human, the driver should always monitor a driving situation, and the driver should intervene immediately in a situation where the system is not aware of it.

Level 3 (Conditional Automation) is the level at which a system is in charge of driving in certain sections of conditions, such as highways, and at which a driver intervenes only in case of danger. The system is in charge of driving control and variable detection during driving, and unlike Level 2, the monitoring is not required. However, if it exceeds the requirements of the system, the system requests the immediate intervention of the driver.

Level 4 (High Automation) is capable of autonomous driving on most roads. Both driving control and driving responsibility are held by a system. Driver intervention is unnecessary on most roads except for restricted situations. However, since driver intervention may be requested under certain conditions such as bad weather, a driving control device through humans is necessary for this level.

Level 5 (Full Automation) is a step of enabling a driving by an occupant only without a driver. The occupant enters only a destination and a system is responsible for driving under all conditions. At Level 5, control devices for steering, acceleration, and deceleration of an autonomous vehicle are unnecessary.

However, when a vehicle is traveling with a person with a disability, particularly a disabled person using a wheelchair, the disabled person may be unable to control his or her body and be helplessly subjected to the movements of the vehicle, and a caregiver may not be able to provide assistance by his or her side.

US 2021/369516 A1 discloses a system for facilitating ingress and egress of a wheelchair into an autonomous vehicle. The system includes a processor configured to identify one or more visual reference features on at least one surface of the AV; automatically deploying a ramp to facilitate ingress of the wheelchair; and tracking an ingress of the wheelchair based on the one or more reference features. The wheelchair can be automatically secured within a cabin of the vehicle by an automatic restraint system.

### SUMMARY OF THE DISCLOSURE

To address the problems described above, independent claims define wheelchair storage systems for providing convenience for a wheelchair-bound disabled person by providing an in-vehicle safety bar to support the front of the disabled person. The invention is defined by independent claims 1 and 8.

The objects of the present disclosure are not limited to the above-mentioned technical objects, and other technical objects not mentioned above will become apparent to one of ordinary skill in the art from the following description.

To achieve these objects and other advantages and in accordance with the purpose of the disclosure, as embodied and broadly described herein, a method of providing convenience to a disabled person using a wheelchair according to one of the embodiments of the present disclosure includes securing the wheelchair to a wheelchair holding plate when a caregiver and the disabled person enter the vehicle, controlling at least one of a floor safety bar or a roof safety bar in response to a control signal received from a manipulator disposed in a back and forth moving seat with the caregiver seated on the back and forth moving seat, and controlling at least one of the back and forth moving seat or a pop-up seat in the vehicle.

In one embodiment, the securing the wheelchair to the wheelchair holding plate may include recognizing, by a position recognition sensor disposed on the wheelchair holding plate, a wheelchair entry position of the wheelchair, determining whether both front and rear wheels of the wheelchair are recognized by the position recognition sensor, transmitting a control signal to the wheelchair holding plate when both the front and rear wheels of the wheelchair are on the sensor, and securing the wheelchair by rotating the wheelchair holding plate rearward.

In one embodiment, the wheelchair holding plate may rotate rearward at an angle ranging from 1 to 5 degrees.

In one embodiment, the controlling at least one of the floor safety bar or the roof safety bar in response to the control signal may include receiving a floor safety bar up signal from the manipulator, controlling the floor safety bar to rise in response to the floor safety bar up signal, and moving the floor safety bar to a preset backrest position.

In one embodiment, the method may further include further receiving the floor safety bar up signal when the floor safety bar has been moved to the preset backrest position, and moving the floor safety bar to a position in front of the wheelchair upon further receiving the floor safety bar up signal.

In one embodiment, the controlling at least one of the back and forth moving seat or the pop-up seat may include receiving a back and forth moving seat movement signal when the floor safety bar is disposed in front of the wheelchair, and controlling the back and forth moving seat to move to a side of the wheelchair in response to the back and forth moving seat movement signal.

In one embodiment, the controlling at least one of the floor safety bar or the roof safety bar in response to the control signal may include further receiving a roof safety bar down signal when the floor safety bar has been moved to the backrest position, and moving the roof safety bar to a position in front of the wheelchair upon further receiving the roof safety bar down signal.

In one embodiment, the controlling at least one of the back and forth moving seat or the pop-up seat may include receiving a pop-up seat movement signal when the roof safety bar is disposed in front of the wheelchair, and controlling the pop-up seat to rise in response to the pop-up seat movement signal.

In one embodiment, the method may include moving the pop-up seat to a backrest position corresponding to a position of the floor safety bar.

A wheelchair storage method according to one of the embodiments of the present disclosure includes, when a caregiver and a wheelchair enter a vehicle, positioning the wheelchair on a wheelchair holding plate, and controlling at least one of a wheelchair lift system, an air cell system, or a safety bar in response to a control signal received from a manipulator.

In one embodiment, the positioning the wheelchair on the wheelchair holding plate includes recognizing, by a position recognition sensor disposed on the wheelchair holding plate, a position of the wheelchair, determining whether both front and rear wheels of the wheelchair are recognized by the position recognition sensor, and receiving, from the position recognition sensor, an activation signal for at least one of the wheelchair lift system or the air cell system when both the front wheels and the rear wheels of the wheelchair are on the sensor.

In one embodiment, the controlling at least one of the wheelchair lift system, the air cell system, or the safety bar in response to the control signal may include, when the wheelchair lift system activated and the lift is engaged with the wheelchair, recognizing the engaged wheelchair by a built-in sensor disposed on the lift.

In one embodiment, the method may further include, when the wheelchair engaged with the lift is manually secured by the caregiver, determining whether the wheelchair moves.

In one embodiment, the method may further include, when the wheelchair does not move, receiving a lift up signal from the manipulator and controlling the lift to rise.

In one embodiment, the method may further include receiving an air cell system control signal from the manipulator and controlling the air cell system.

In one embodiment, the controlling at least one of the wheelchair lift system, the air cell system, or the safety bar in response to the control signal may include activating the air cell system, and manually securing, by the caregiver, the wheelchair to the wheelchair holding plate.

In one embodiment, the method may further include determining, when the wheelchair engaged with the lift is manually secured by the caregiver, whether the wheelchair moves, and when the wheelchair does not move, operating the air cell system upon receiving an air cell system control signal from the manipulator.

In one embodiment, the method may further include receiving a safety bar control signal from the manipulator, and controlling the safety bar to move to a position in front of the wheelchair.

According to one of the embodiments of the present disclosure, a back and forth moving seat is provided to allow a caregiver to attend to a wheelchair-bound person when the person is riding in a vehicle, thereby addressing the inconvenience of the person while the vehicle is traveling.

The effects obtainable from the present disclosure are not limited to those mentioned above, and other effects not mentioned will be apparent to one having ordinary skill in the art from the following description.

### BRIEF DESCRIPTION OF THE DRAWINGS

FIG. 1 is an overall block diagram of an autonomous driving control system to which an autonomous driving apparatus according to one of embodiments of the present disclosure is applicable.
FIG. 2 is a diagram illustrating an example in which an autonomous driving apparatus according to one of embodiments of the present disclosure is applied to a vehicle.
FIG. 3 is a diagram illustrating a system for providing convenience for a wheelchair-bound disabled person according to one embodiment of the present disclosure.
FIG. 4 is a diagram illustrating a behavior of a wheelchair-bound disabled person entering a vehicle according to embodiments of the present disclosure.
FIG. 5 is a flowchart illustrating the operation of a wheelchair-bound disabled person entering a vehicle according to embodiments of the present disclosure.
FIG. 6 illustrates a method of providing convenience using a floor safety bar according to embodiments of the present disclosure.
FIG. 7 is a flowchart illustrating a method of providing convenience using a floor safety bar according to embodiments of the present disclosure.
FIG. 8 illustrates a method of providing convenience using a floor safety bar and a roof safety bar according to embodiments of the present disclosure.
FIG. 9 is a flowchart illustrating a method of providing convenience using a floor safety bar and a roof safety bar according to embodiments of the present disclosure.
FIG. 10 is a diagram illustrating a wheelchair storage system according to a first embodiment of the present disclosure.
FIG. 11 illustrates the operation of loading a wheelchair into a vehicle according to embodiments of the present disclosure.
FIGS. 12 to 14 illustrate the operation of a wheelchair storage system according to embodiments of the present disclosure.
FIGS. 15 and 16 are flowcharts illustrating the operation of loading a wheelchair into a vehicle according to embodiments of the present disclosure.
FIG. 17 is a diagram illustrating a wheelchair storage system according to a second embodiment of the present disclosure.
FIG. 18 illustrates the operation of loading a wheelchair into a vehicle according to embodiments of the present disclosure.
FIGS. 19 and 20 illustrate the operation of a wheelchair storage system according to embodiments of the present disclosure.
FIGS. 21 and 22 are flowcharts illustrating the operation of loading a wheelchair into a vehicle according to embodiments of the present disclosure.

### DETAILED DESCRIPTION OF THE DISCLOSURE

Hereinafter, embodiments of the present disclosure will be described in detail with reference to the accompanying drawings so that those skilled in the art to which the present disclosure pertains may easily implement the present disclosure. However, the present disclosure may be implemented in various different forms and is not limited to the embodiments described herein. In addition, in order to clearly describe this disclosure in drawings, parts unrelated to the description are omitted and similar reference numbers are given to similar parts throughout the specification.

Throughout the specification, when a part "includes" a certain component, this means that it may further include other components, rather than excluding other components, unless otherwise stated.

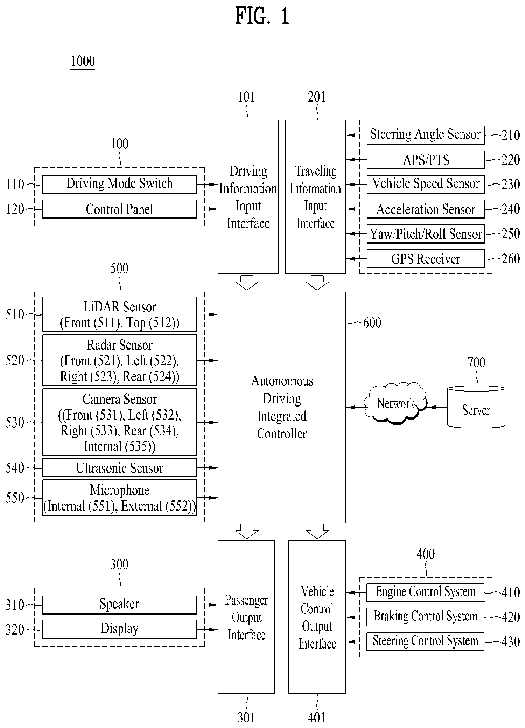

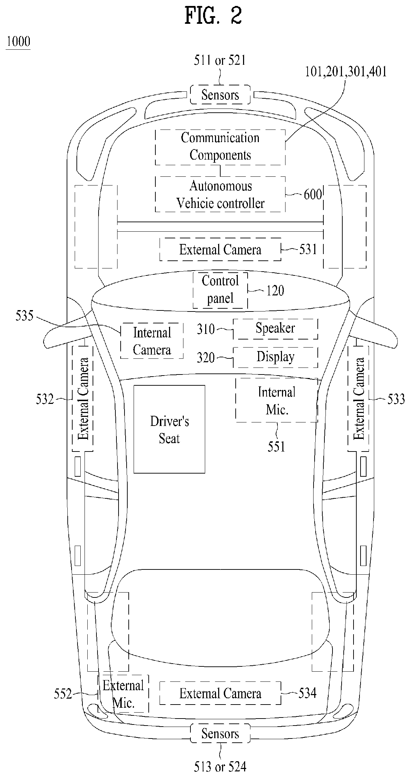

FIG. 1 is an overall block diagram of an autonomous driving control system to which an autonomous driving apparatus according to any one of embodiments of the present disclosure is applicable. FIG. 2 is a diagram illustrating an example in which an autonomous driving apparatus according to any one of embodiments of the present disclosure is applied to a vehicle.

First, a structure and function of an autonomous driving control system (e.g., an autonomous driving vehicle) to which an autonomous driving apparatus according to the present embodiments is applicable will be described with reference to FIGS. 1 and 2.

As illustrated in FIG. 1, an autonomous driving vehicle 1000 may be implemented based on an autonomous driving integrated controller 600 that transmits and receives data necessary for autonomous driving control of a vehicle through a driving information input interface 101, a traveling information input interface 201, an occupant output interface 301, and a vehicle control output interface 401. However, the autonomous driving integrated controller 600 may also be referred to herein as a controller, a processor, or, simply, a controller.

The autonomous driving integrated controller 600 may obtain, through the driving information input interface 101, driving information based on manipulation of an occupant for a user input unit 100 in an autonomous driving mode or manual driving mode of a vehicle. As illustrated in FIG. 1, the user input unit 100 may include a driving mode switch 110 and a control panel 120 (e.g., a navigation terminal mounted on the vehicle or a smartphone or tablet computer owned by the occupant). Accordingly, driving information may include driving mode information and navigation information of a vehicle.

For example, a driving mode (i.e., an autonomous driving mode/manual driving mode or a sports mode/eco mode/safety mode/normal mode) of the vehicle determined by manipulation of the occupant for the driving mode switch 110 may be transmitted to the autonomous driving integrated controller 600 through the driving information input interface 101 as the driving information.

Furthermore, navigation information, such as the destination of the occupant input through the control panel 120 and a path up to the destination (e.g., the shortest path or preference path, selected by the occupant, among candidate paths up to the destination), may be transmitted to the autonomous driving integrated controller 600 through the driving information input interface 101 as the driving information.

The control panel 120 may be implemented as a touchscreen panel that provides a user interface (UI) through which the occupant inputs or modifies information for autonomous driving control of the vehicle. In this case, the driving mode switch 110 may be implemented as touch buttons on the control panel 120.

In addition, the autonomous driving integrated controller 600 may obtain traveling information indicative of a driving state of the vehicle through the traveling information input interface 201. The traveling information may include a steering angle formed when the occupant manipulates a steering wheel, an accelerator pedal stroke or brake pedal stroke formed when the occupant depresses an accelerator pedal or brake pedal, and various types of information indicative of driving states and behaviors of the vehicle, such as a vehicle speed, acceleration, a yaw, a pitch, and a roll formed in the vehicle. The traveling information may be detected by a traveling information detection unit 200, including a steering angle sensor 210, an accelerator position sensor (APS)/pedal travel sensor (PTS) 220, a vehicle speed sensor 230, an acceleration sensor 240, and a yaw/pitch/roll sensor 250, as illustrated in FIG. 1.

Furthermore, the traveling information of the vehicle may include location information of the vehicle. The location information of the vehicle may be obtained through a global positioning system (GPS) receiver 260 applied to the vehicle. Such traveling information may be transmitted to the autonomous driving integrated controller 600 through the traveling information input interface 201 and may be used to control the driving of the vehicle in the autonomous driving mode or manual driving mode of the vehicle.

The autonomous driving integrated controller 600 may transmit driving state information provided to the occupant to an output unit 300 through the occupant output interface 301 in the autonomous driving mode or manual driving mode of the vehicle. That is, the autonomous driving integrated controller 600 transmits the driving state information of the vehicle to the output unit 300 so that the occupant may check the autonomous driving state or manual driving state of the vehicle based on the driving state information output through the output unit 300. The driving state information may include various types of information indicative of driving states of the vehicle, such as a current driving mode, transmission range, and speed of the vehicle.

If it is determined that it is necessary to warn a driver in the autonomous driving mode or manual driving mode of the vehicle along with the above driving state information, the autonomous driving integrated controller 600 transmits warning information to the output unit 300 through the occupant output interface 301 so that the output unit 300 may output a warning to the driver. In order to output such driving state information and warning information acoustically and visually, the output unit 300 may include a speaker 310 and a display 320 as illustrated in FIG. 1. In this case, the display 320 may be implemented as the same device as the control panel 120 or may be implemented as an independent device separated from the control panel 120.

Furthermore, the autonomous driving integrated controller 600 may transmit control information for driving control of the vehicle to a lower control system 400, applied to the vehicle, through the vehicle control output interface 401 in the autonomous driving mode or manual driving mode of the vehicle. As illustrated in FIG. 1, the lower control system 400 for driving control of the vehicle may include an engine control system 410, a braking control system 420, and a steering control system 430. The autonomous driving integrated controller 600 may transmit engine control information, braking control information, and steering control information, as the control information, to the respective lower control systems 410, 420, and 430 through the vehicle control output interface 401. Accordingly, the engine control system 410 may control the speed and acceleration of the vehicle by increasing or decreasing fuel supplied to an engine. The braking control system 420 may control the braking of the vehicle by controlling braking power of the vehicle. The steering control system 430 may control the steering of the vehicle through a steering device (e.g., motor driven power steering (MDPS) system) applied to the vehicle.

As described above, the autonomous driving integrated controller 600 according to the present embodiment may obtain the driving information based on manipulation of the driver and the traveling information indicative of the driving state of the vehicle through the driving information input interface 101 and the traveling information input interface 201, respectively, and transmit the driving state information and the warning information, generated based on an autonomous driving algorithm, to the output unit 300 through the occupant output interface 301. In addition, the autonomous driving integrated controller 600 may transmit the control information generated based on the autonomous driving algorithm to the lower control system 400 through the vehicle control output interface 401 so that driving control of the vehicle is performed.

In order to guarantee stable autonomous driving of the vehicle, it is necessary to continuously monitor the driving state of the vehicle by accurately measuring a driving environment of the vehicle and to control driving based on the measured driving environment. To this end, as illustrated in FIG. 1, the autonomous driving apparatus according to the present embodiment may include a sensor unit 500 for detecting a nearby object of the vehicle, such as a nearby vehicle, pedestrian, road, or fixed facility (e.g., a signal light, a signpost, a traffic sign, or a construction fence).

The sensor unit 500 may include one or more of a LiDAR sensor 510, a radar sensor 520, or a camera sensor 530, in order to detect a nearby object outside the vehicle, as illustrated in FIG. 1.

The LiDAR sensor 510 may transmit a laser signal to the periphery of the vehicle and detect a nearby object outside the vehicle by receiving a signal reflected and returning from a corresponding object. The LiDAR sensor 510 may detect a nearby object located within the ranges of a preset distance, a preset vertical field of view, and a preset horizontal field of view, which are predefined depending on specifications thereof. The LiDAR sensor 510 may include a front LiDAR sensor 511, a top LiDAR sensor 512, and a rear LiDAR sensor 513 installed at the front, top, and rear of the vehicle, respectively, but the installation location of each LiDAR sensor and the number of LiDAR sensors installed are not limited to a specific embodiment. A threshold for determining the validity of a laser signal reflected and returning from a corresponding object may be previously stored in a memory (not illustrated) of the autonomous driving integrated controller 600. The autonomous driving integrated controller 600 may determine a location (including a distance to a corresponding object), speed, and moving direction of the corresponding object using a method of measuring time taken for a laser signal, transmitted through the LiDAR sensor 510, to be reflected and returning from the corresponding object.

The radar sensor 520 may radiate electromagnetic waves around the vehicle and detect a nearby object outside the vehicle by receiving a signal reflected and returning from a corresponding object. The radar sensor 520 may detect a nearby object within the ranges of a preset distance, a preset vertical field of view, and a preset horizontal field of view, which are predefined depending on specifications thereof. The radar sensor 520 may include a front radar sensor 521, a left radar sensor 522, a right radar sensor 523, and a rear radar sensor 524 installed at the front, left, right, and rear of the vehicle, respectively, but the installation location of each radar sensor and the number of radar sensors installed are not limited to a specific embodiment. The autonomous driving integrated controller 600 may determine a location (including a distance to a corresponding object), speed, and moving direction of the corresponding object using a method of analyzing power of electromagnetic waves transmitted and received through the radar sensor 520.

The camera sensor 530 may detect a nearby object outside the vehicle by photographing the periphery of the vehicle and detect a nearby object within the ranges of a preset distance, a preset vertical field of view, and a preset horizontal field of view, which are predefined depending on specifications thereof.

The camera sensor 530 may include a front camera sensor 531, a left camera sensor 532, a right camera sensor 533, and a rear camera sensor 534 installed at the front, left, right, and rear of the vehicle, respectively, but the installation location of each camera sensor and the number of camera sensors installed are not limited to a specific embodiment. The autonomous driving integrated controller 600 may determine a location (including a distance to a corresponding object), speed, and moving direction of the corresponding object by applying predefined image processing to an image captured by the camera sensor 530.

In addition, an internal camera sensor 535 for capturing the inside of the vehicle may be mounted at a predetermined location (e.g., rear view mirror) within the vehicle. The autonomous driving integrated controller 600 may monitor a behavior and state of the occupant based on an image captured by the internal camera sensor 535 and output guidance or a warning to the occupant through the output unit 300.

As illustrated in FIG. 1, the sensor unit 500 may further include an ultrasonic sensor 540 in addition to the LiDAR sensor 510, the radar sensor 520, and the camera sensor 530 and further adopt various types of sensors for detecting a nearby object of the vehicle along with the sensors.

FIG. 2 illustrates an example in which, in order to aid in understanding the present embodiment, the front LiDAR sensor 511 or the front radar sensor 521 is installed at the front of the vehicle, the rear LiDAR sensor 513 or the rear radar sensor 524 is installed at the rear of the vehicle, and the front camera sensor 531, the left camera sensor 532, the right camera sensor 533, and the rear camera sensor 534 are installed at the front, left, right, and rear of the vehicle, respectively. However, as described above, the installation location of each sensor and the number of sensors installed are not limited to a specific embodiment.

Furthermore, in order to determine a state of the occupant within the vehicle, the sensor unit 500 may further include a bio sensor for detecting bio signals (e.g., heart rate, electrocardiogram, respiration, blood pressure, body temperature, electroencephalogram, photoplethysmography (or pulse wave), and blood sugar) of the occupant. The bio sensor may include a heart rate sensor, an electrocardiogram sensor, a respiration sensor, a blood pressure sensor, a body temperature sensor, an electroencephalogram sensor, a photoplethysmography sensor, and a blood sugar sensor.

Finally, the sensor unit 500 additionally includes a microphone 550 having an internal microphone 551 and an external microphone 552 used for different purposes.

The internal microphone 551 may be used, for example, to analyze the voice of the occupant in the autonomous driving vehicle 1000 based on AI or to immediately respond to a direct voice command of the occupant.

In contrast, the external microphone 552 may be used, for example, to appropriately respond to safe driving by analyzing various sounds generated from the outside of the autonomous driving vehicle 1000 using various analysis tools such as deep learning.

For reference, the symbols illustrated in FIG. 2 may perform the same or similar functions as those illustrated in FIG. 1. FIG. 2 illustrates in more detail a relative positional relationship of each component (based on the interior of the autonomous driving vehicle 1000) as compared with FIG. 1.

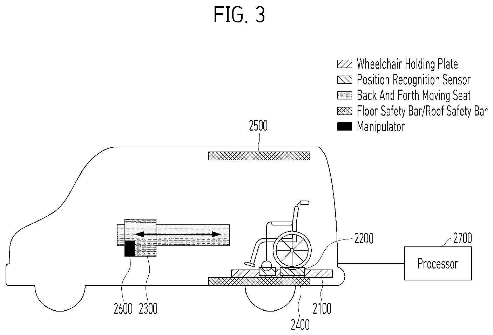

FIG. 3 is a diagram illustrating a system for providing convenience for a wheelchair-bound disabled person according to one embodiment of the present disclosure.

Referring to FIG. 3, the system for providing convenience for a wheelchair-bound disabled person includes a wheelchair holding plate 2100, a position recognition sensor 2200, a back and forth moving seat 2300, a floor safety bar 2400, a roof safety bar 2500, a manipulator 2600, and a processor 2700.

The wheelchair holding plate 2100 may be a plate for fastening a wheelchair in a vehicle to the floor. The wheelchair holding plate 2100 may be tilted at an angle to engage with the wheels of the wheelchair upon receiving a signal from the position recognition sensor 2200.

The position recognition sensor 2200 is configured to recognize the wheelchair in the vehicle 1000, and may be a sensor that determines a wheelchair entry position in the vehicle.

The back and forth moving seat 2300 may be coupled to rails that are disposed on one side wall of the vehicle. The back and forth moving seat 2300 may be a seat that is movable to the front and back of the vehicle along the rails. The back and forth moving seat 2300 may move manually or automatically in response to a control input provided by a user in the vehicle through the manipulator 2600.

The back and forth moving seat 2300 may be a rail-type seat structure that can be moved back and forth on a side of the vehicle. It may be repositioned to secure convenience to protect the disabled during vehicle operation.

The floor safety bar 2400 may be disposed on the floor of the vehicle and may be raised from the floor. When the floor safety bar 2400 is raised from the floor of the vehicle to the front of the wheelchair user, it may serve as a front safety bar for the wheelchair user. It may also serve as a backrest for a caregiver to lean against when raised from the floor of the vehicle to the front of the wheelchair user. For example, the floor safety bar 2400 may be used as a backrest for the first row of seats in the vehicle.

The roof safety bar 2500 may be a safety bar arranged to descend from the roof of the vehicle. The roof safety bar 2500 may serve as a front safety bar for the wheelchair user when it descends from the roof of the vehicle to the front of the wheelchair user. That is, when the roof safety bar 2500 descends from the roof of the vehicle to the front of the wheelchair user, it may surround the wheelchair or seat and serve as a front support.

The manipulator 2600 may be disposed on one side of the back and forth moving seat 2300. The manipulator 2600 may include at least one of a command button configured to automatically move the safety bar and seat, or a lever configured to manually move the seat. The manipulator 2600 may include a command button configured to move the back and forth moving seat 2300 back and forth. The manipulator 2600 may include a command button configured to cause the floor safety bar 2400 to rise from the floor. The manipulator 2600 may include a command button configured to cause the roof safety bar 2500 to descend from the roof.

The processor 2700 is configured to control the wheelchair holding plate 2100, the position recognition sensor 2200, the back and forth moving seat 2300, the floor safety bar 2400, the roof safety bar 2500, and the manipulator 2600.

Once a caregiver and a wheelchair-bound disabled person enter the vehicle, the processor 2700 is configured to secure the wheelchair to the wheelchair holding plate 2100.

The processor 2700 may recognize the entry position of the wheelchair by the position recognition sensor 2200 disposed on the wheelchair holding plate 2100. The processor 2700 may determine whether both front and rear wheels of the wheelchair are recognized by the position recognition sensor 2200. When both the front and rear wheels of the wheelchair are on the sensor, the processor 2700 may send a control signal to the wheelchair holding plate 2100. The processor 2700 may control the wheelchair holding plate 2100 to rotate rearward to secure the wheelchair. The processor 2700 may control the wheelchair holding plate to rotate rearward by an angle between 1 and 5 degrees.

The processor 2700 may control at least one of the floor safety bar 2400 or the roof safety bar 2500 in response to a control signal received from the manipulator 2600 disposed on the back and forth moving seat 2300 on which the caregiver is seated.

The processor 2700 may receive a floor safety bar up signal from the manipulator 2600, and may control the floor safety bar 2400 to be raised in response to the floor safety bar up signal.

The processor 2700 may control the floor safety bar 2400 to move to a preset backrest position.

When the floor safety bar 2400 is moved to the preset backrest position, the processor 2700 may further receive a floor safety bar up signal. Upon further receiving the floor safety bar up signal, the processor 2700 may control the floor safety bar 2400 to move to the front of the wheelchair.

When the floor safety bar 2400 is moved to the backrest position, the processor 2700 may further receive a roof safety bar down signal. Upon further receiving the roof safety bar down signal, the processor 2700 may control the roof safety bar 2500 to move to the front of the wheelchair.

The processor 2700 may control at least one of the back and forth moving seat 2300 or a pop-up seat of the vehicle.

When the floor safety bar 2400 is disposed in front of the wheelchair, the processor 2700 may receive a back and forth moving seat move signal. In response to the back and forth moving seat move signal, the processor 2700 may control the back and forth moving seat 2300 to move to a side of the wheelchair.

When the roof safety bar 2500 is disposed in front of the wheelchair, the processor 2700 may receive a pop-up seat move signal, and may control the pop-up seat to rise in response to the pop-up seat move signal.

The processor 2700 includes a processor (e.g., computer, microprocessor, CPU, ASIC, circuitry, logic circuits, etc.) and an associated non-transitory memory storing software instructions which, when executed by the processor, provides the functionalities of the processor 2700 as discussed above. Herein the processor and the memory may be implemented as a single integrated circuit (semiconductor circuit). In some implementations, the processor may embody one or more processor(s).

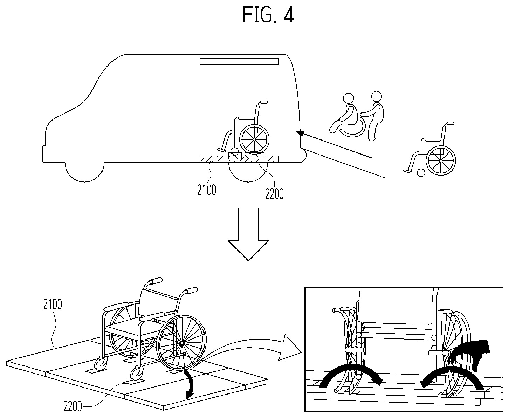

FIG. 4 is a diagram illustrating a behavior of a wheelchair-bound disabled person entering a vehicle according to embodiments of the present disclosure.

Referring to FIG. 4, a wheelchair-bound disabled person may enter the vehicle 1000 accompanied by a caregiver. The caregiver may open the vehicle tailgate and move the wheelchair into the vehicle. Once the wheelchair is moved into the vehicle, a wheelchair entry position may be recognized by the position recognition sensor 2200 disposed on the wheelchair holding plate 2100. Then, the position recognition sensor 2200 may transmit a wheelchair entry signal to the processor 2700. The processor 2700 may transmit a holding plate control signal based on the wheelchair entry signal.

Upon receiving the control signal from the processor 2700, the wheelchair holding plate 2100 may be tilted to a preset angle to hold the wheelchair so as to prevent the wheelchair from moving back and forth.

In the example illustrated in the figure, the inclination of the wheelchair holding plate 2100 is 3 degrees. It may have a value in the range of 2 degrees to 4 degrees as needed, but is not necessarily limited to this range.

Subsequently, the wheels of the wheelchair may be engaged with the fasteners on the wheelchair holding plate 2100 by the caregiver.

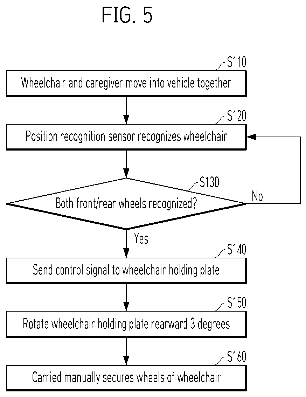

FIG. 5 is a flowchart illustrating the operation of a wheelchair-bound disabled person entering a vehicle according to embodiments of the present disclosure.

Referring to FIG. 5, when a wheelchair is pushed by a caregiver from the outside to move into a vehicle (S110), the processor 2700 may receive a wheelchair entry signal from the position recognition sensor 2200 disposed on the wheelchair holding plate 2100 (S120).

After operation S120, the processor 2700 may determine, based on the wheelchair entry signal, whether both the front and rear wheels of the wheelchair are recognized by the position recognition sensor 2200 (S130).

After operation S130, when both the front and rear wheels of the wheelchair are recognized by the position recognition sensor 2200 (Yes in S130), the processor 2700 may send a control signal to the wheelchair holding plate 2100 (S140).

After operation S140, the wheelchair holding plate 2100 receiving the control signal from the processor 2700 may rotate rearward 3 degrees such that the wheelchair is secured to the wheelchair holding plate 2100 (S150).

After operation S150, the wheels of the wheelchair may be manually engaged with the fasteners of the wheelchair holding plate 2100 by the caregiver on the back and forth moving seat 2300 (S160).

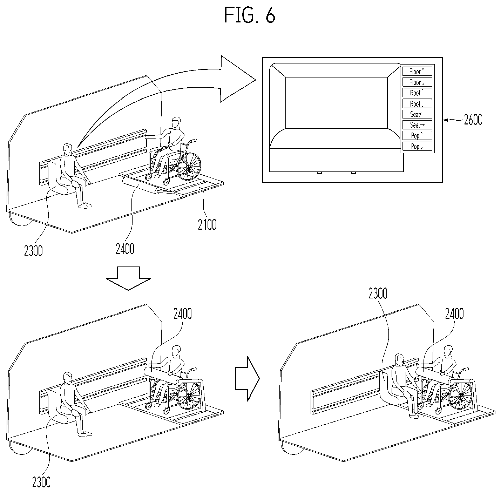

FIG. 6 illustrates a method of providing convenience using a floor safety bar according to embodiments of the present disclosure.

Referring to FIG. 6, a wheelchair-bound disabled person may enter the vehicle 1000, and a caregiver may be seated on the back and forth moving seat 2300 in the vehicle.

The caregiver may then operate a safety bar using the manipulator 2600 located next to the back and forth moving seat 2300. At this time, the caregiver may select one of the floor safety bar 2400 or the roof safety bar 2500.

For example, the manipulator 2600 may include an up button to raise the floor safety bar 2400, a down button to lower the floor safety bar 2400, an up button to raise the roof safety bar 2500, a down button to lower the roof safety bar 2500, a forward movement button to move the back and forth moving seat 2300 to the front of the vehicle, a rearward movement button to move the back and forth moving seat 2300 to the back of the vehicle, an up button to raise the pop-up seat, and a down button to lower the pop-up seat.

When the caregiver operates the floor safety bar 2400, the floor safety bar 2400 may move to a position for caring for the wheelchair. For example, the floor safety bar 2400 may move to be positioned in front of the wheelchair-bound disabled person. Thereby, the floor restraint 2400 may function to protect the wheelchair and the wheelchair-bound disabled person.

Thereafter, when the back and forth moving seat 2300 is operated by the caregiver, the back and forth moving seat 2300 may move from the front to the back of the vehicle. For example, when the caregiver operates the rearward movement button for the back and forward moving seat 2300 once, the back and forth moving seat 2300 may move from the front to the back of the vehicle. When the caregiver operates the rearward movement button one additional time during the movement, the back and forward moving seat 2300 may stop.

This allows the caregiver to ride in the vehicle while facing one side of the vehicle, and the seat may be moved forward and rearward to move to the side of the wheelchair-bound disabled person to care for the disabled person in the vehicle. Accordingly, when the disabled person wants the caregiver to be next to him/her while the vehicle is traveling, he/she may get immediate help from the caregiver.

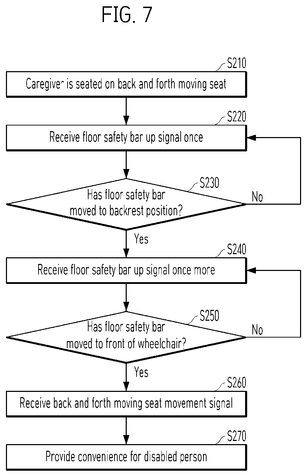

FIG. 7 is a flowchart illustrating a method of providing convenience using a floor safety bar according to embodiments of the present disclosure.

Referring to FIG. 7, when the caregiver is seated on the back and forth moving seat 2300 (S210), the processor 2600 may receive one up signal for the floor safety bar 2400 from the manipulator 2600 disposed on the side of the seat (S220).

After operation S220, the processor 2700 may determine whether the floor safety bar 2400 has moved to the backrest position (S230).

After operation S230, when the floor safety bar 2400 has moved to the backrest position (Yes in S230), the processor 2700 may receive one additional up signal for the floor safety bar 2400 from the manipulator 2600 (S240).

After operation S240, the processor 2700 may determine whether the floor safety bar 2400 has moved to the front of the wheelchair (S250).

After operation S250, when the floor safety bar 2400 has moved to the front of the wheelchair (Yes in S250), the processor 2700 may receive a movement signal for the back and forth moving seat 2300 from the manipulator 2600 (S260).

After operation S260, the wheelchair-bound disabled person may be cared for by the caregiver seated on the back and forth moving seat 2300 (S270).

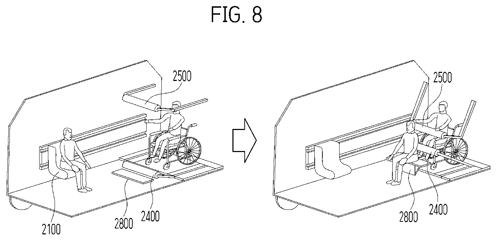

FIG. 8 illustrates a method of providing convenience using a floor safety bar and a roof safety bar according to embodiments of the present disclosure.

Referring to FIG. 8, a wheelchair-bound disabled person may enter the vehicle 1000, and a caregiver may be seated on the back and forth moving seat 2300 in the vehicle.

The caregiver may then operate a safety bar using the manipulator 2600 located next to the back and forth moving seat 2300. At this time, the caregiver may select one of the floor safety bar 2400 or roof safety bar 2500.

When the caregiver operates the floor safety bar 2400, the floor safety bar 2400 may be moved to the backrest position. When the caregiver operates the loop safety bar 2500, the loop safety bar 2500 may be moved to be positioned in front of the wheelchair-bound disabled person.

Then, when the caregiver operates the pop-up seat 2800, the pop-up seat 2800 may rise from the floor of the vehicle. In this case, the pop-up seat 2800 is positioned in front of the floor safety bar 2400 and may rise in response to the position of the floor safety bar 2400. As a result, when the caregiver is seated on the pop-up seat 2800 that is raised from the vehicle floor, the floor safety bar 2400 may serve as a backrest for the caregiver.

Thus, the caregiver rides in the vehicle in a forward facing position, and may move to the front of the wheelchair-bound disabled person to provide care in the vehicle.

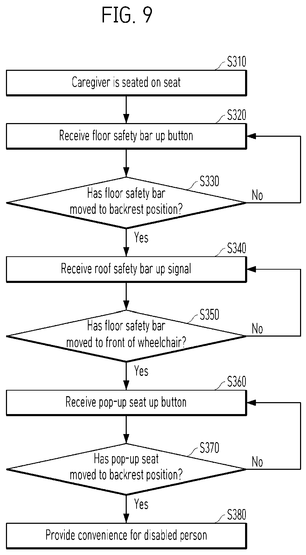

FIG. 9 is a flowchart illustrating a method of providing convenience using a floor safety bar and a roof safety bar according to embodiments of the present disclosure.

Referring to FIG. 9, when a caregiver is seated on the back and forth moving seat 2300 (S310), the processor 2600 may receive one up signal for the floor safety bar 2400 from the manipulator 2600 disposed on the side of the seat (S320).

After operation S320, the processor 2700 may determine whether the floor safety bar 2400 has moved to the backrest position (S330).

After operation S330, when the floor safety bar 2400 has moved to the backrest position (Yes in S330), the processor 2700 may additionally receive a down signal for the roof safety bar 2500 from the manipulator 2600 (S340).

After operation S340, the processor 2700 may determine whether the roof safety bar 2500 has moved to the front of the wheelchair (S350).

After operation S350, when the roof safety bar 2500 has moved to the front of the wheelchair (Yes in S350), the processor 2700 may receive a movement signal for the pop-up seat 2800 from the manipulator 2600 (S360).

After operation S360, the processor 2700 may determine whether the pop-up seat 2800 has moved to the backrest position (S370).

After operation S370, when the pop-up seat 2800 has moved to the backrest position, the wheelchair-bound disabled person may be cared for by the caregiver seated on the pop-up seat 2800 (S380).

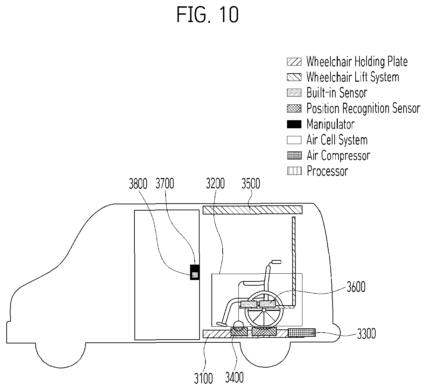

FIG. 10 is a diagram illustrating a wheelchair storage system according to a second embodiment of the present disclosure.

Referring to FIG. 10, a wheelchair storage system 3000 includes a wheelchair holding plate 3100, an air cell system 3200, an air compressor 3300, a position recognition sensor 3400, a wheelchair lift system 3500, a built-in sensor 3600, a manipulator 3700, and a processor 3800.

The air cell system 3200 may be disposed on one side of the wheelchair holding plate 3100 to hold the wheelchair. The air cell system 3200 may be supplied with air through the air compressor 3300 disposed at the rear of the wheelchair holding plate 3100.

The position recognition sensor 3400 is configured to recognize a wheelchair in the vehicle 1000, and may be a sensor that determines the position of the wheelchair in the vehicle.

The wheelchair lift system 3500 may include a lift 3510 that descends from the roof of the vehicle. The wheelchair lift system 3500 may descend from the roof of the vehicle to the back of the wheelchair and surround the wheelchair or seat to provide support for the entire wheelchair.

The built-in sensor 3600 may be disposed at the end of the lift 3510, which is the portion where the wheelchair is mounted on the wheelchair lift system 3500.

The manipulator 3700 may be disposed on one side of the vehicle entrance. The manipulator 3700 may include a command button to turn the air cell system 3200 ON/OFF. The manipulator 3700 may include command buttons to raise and lower the wheelchair lift system 3500.

The processor 3800 is configured to control the wheelchair holding plate 3100, the position recognition sensor 3400, the vehicle entrance, the safety bar 3900, the wheelchair lift system 3500, and the manipulator 3700. The processor 3800 may be disposed on the manipulator 3700, but is not limited thereto.

When the caregiver and the wheelchair enter the vehicle and the wheelchair is positioned on the wheelchair holding plate 3100, the processor 3800 is configured to control at least one of the wheelchair lift system 3500, the air cell system 3200, or the safety bar 3900 in response to a control signal received from the manipulator 3700.

When the position recognition sensor 3400 disposed on the wheelchair holding plate 3100 recognizes the position of the wheelchair, the processor 3800 is configured to determine whether both the front and rear wheels of the wheelchair are recognized by the position recognition sensor 3400. When both the front and rear wheels of the wheelchair are on the sensor, the processor 3800 may receive a control signal from the position recognition sensor 3400.

In the case where the wheelchair lift system 3500 is activated, when the lift is engaged with the wheelchair, the processor 3800 may recognize the engaged wheelchair by the built-in sensors disposed on the lift 3510.

When the wheelchair engaged with the lift 3510 is manually secured by the caregiver, the processor 3800 may determine whether the wheelchair is moving.

When there is no movement of the wheelchair, the processor 3800 may receive a lift up signal from the manipulator 3700, and cause the lift to rise.

The processor 3800 may receive an air cell system control signal from the manipulator 3700 and operate the air cell system 3200.

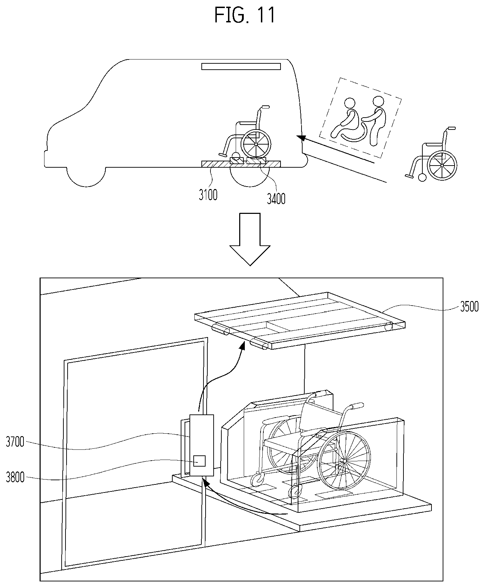

FIG. 11 illustrates the operation of loading a wheelchair into a vehicle according to embodiments of the present disclosure.

Referring to FIG. 11, a wheelchair-bound disabled person may enter the vehicle 1000 accompanied by a caregiver. The caregiver may open the vehicle tailgate and move the wheelchair into the vehicle. Once the wheelchair is moved into the vehicle, the position of the wheelchair may be recognized by the position recognition sensor 3400 disposed on the wheelchair holding plate 3100, and the position recognition sensor 3400 may transmit a wheelchair entry signal to the processor 3800 in the manipulator 3700. The processor 3800 may transmit a wheelchair lift control signal based on the wheelchair entry signal.

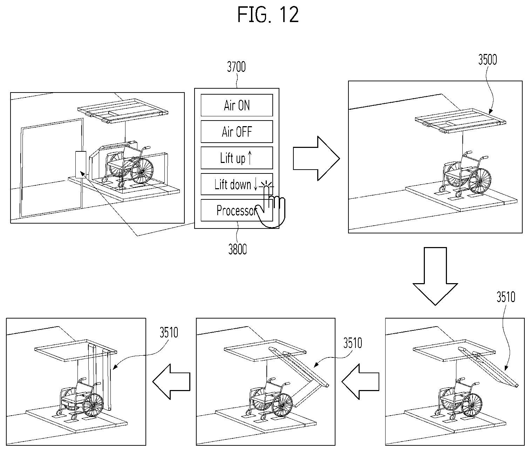

FIGS. 12 to 14 illustrate the operation of a wheelchair storage system according to embodiments of the present disclosure.

Referring to FIG. 12, a wheelchair may be loaded into the vehicle 1000, and a caregiver may enter the vehicle.

The caregiver riding in the vehicle may then operate the lift 3510 using the manipulator 3700 disposed at the entrance to the vehicle. For example, the manipulator 3700 may include an air ON button to inflate the air cell system 3200, an air OFF button to deflate the air cell system 3200, an up button to raise the lift 3510, and a down button to lower the lift 3510.

When the wheelchair lift system 3500 is operated by the caregiver, the wheelchair lift system 3500 may be moved to a position for engagement with the wheelchair. In other words, when the down button to lower the lift 3510 is pressed through the manipulator 3700, the lift 3510 may be lowered from the roof of the vehicle.

The lift has three layers and may be operated to extend. As the lift extends and descends, the wheelchair may be seated on a catch protrusion on the third layer of the lift.

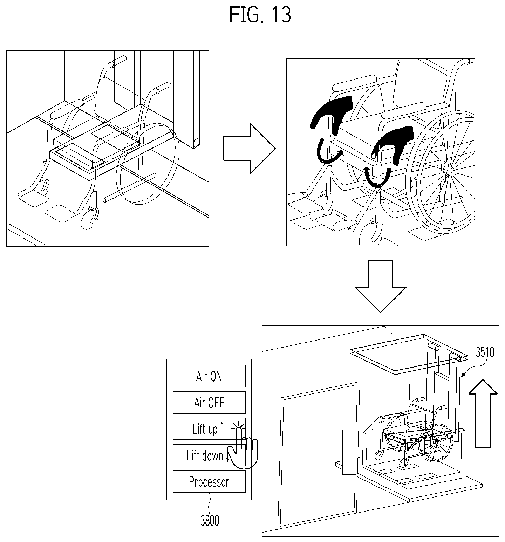

Referring to FIG. 13, when the wheelchair is seated on the lift 3510, a built-in sensor may recognize the seated wheelchair and send a wheelchair built-in completion signal to the processor 3800. Additionally, a portion of the wheelchair may be manually fastened to a fastener on the lift 3510 by the caregiver.

The caregiver may then press the lift system operation button again to operate the lift 3510. When the up button to raise the lift 3510 is pressed by the caregiver, the lift to which the wheelchair is secured may rise toward the roof and be held off the floor. As a result, the lift may rise and the wheelchair may be lifted off the wheelchair holding plate and kept in the air.

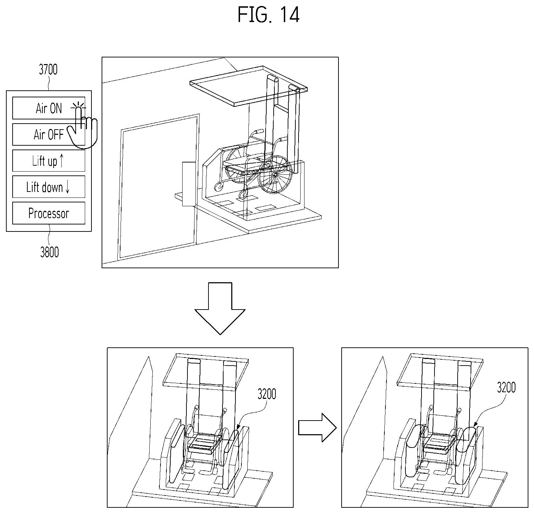

Referring to FIG. 14, when the air ON button to inflate the air cell system 3200 is pressed by the caregiver after the wheelchair has risen into the air, the volume of the air cell may be increased to reliably hold the raised lift and the wheelchair.

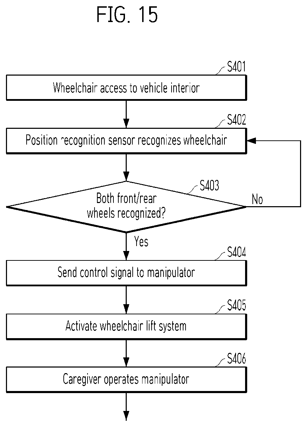

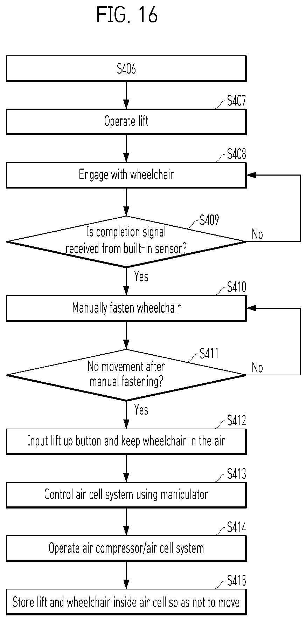

FIGS. 15 and 16 are flowcharts illustrating the operation of loading a wheelchair into a vehicle according to embodiments of the present disclosure.

Referring to FIGS. 15 and 16, when a wheelchair is pushed by a caregiver from the outside to move into a vehicle (S401), the wheelchair storage system 3000 may receive a wheelchair entry signal from the position recognition sensor 3400 disposed on the wheelchair holding plate 3100 (S402).

After operation S402, the wheelchair storage system 3000 may determine, based on the wheelchair entry signal, whether both the front and rear wheels of the wheelchair are recognized by the position recognition sensor 3400 (S403).

After operation S403, when both the front and rear wheels of the wheelchair are recognized by the position recognition sensor 3400 (Yes in S403), the wheelchair storage system 3000 may send a wheelchair lift system activation signal from the processor 3800 (S404).

After operation S404, the wheelchair storage system 3000 may receive the wheelchair lift system activation signal and control the wheelchair lift system 3500 to be activated (S405).

After operation S405, when the wheelchair storage system 3000 receives a wheelchair control signal from the manipulator 3700 by the caregiver in the vehicle (S406), the lift 3510 may be operated based on the wheelchair control signal (S407).

After operation S407, when the lift engages with the wheelchair (S408), the wheelchair storage system 3000 may determine whether a completion signal has been received from the built-in sensor 3600 (S409).

After operation S409, when the completion signal has been received from the built-in sensor 3600 (Yes in S409), the wheelchair and the lift may be manually fastened (S410), and the wheelchair storage system 3000 may determine whether the wheelchair and the lift have not moved since the manual fastening (S411).

After operation S411, when the wheelchair and the lift have not moved since the manual fastening (Yes in S410), the wheelchair storage system 3000 may receive an input through an up button for raising the lift 3510, and may secure the wheelchair in the air for storage (S412).

After operation S412, the wheelchair storage system 3000 may receive an air cell system control signal (S413) and operate the air compressor 3300 and the air cell system 3200 (S414).

After operation S414, the wheelchair storage system 3000 may store the lift and the wheelchair inside the air cell so as not to move (S415).

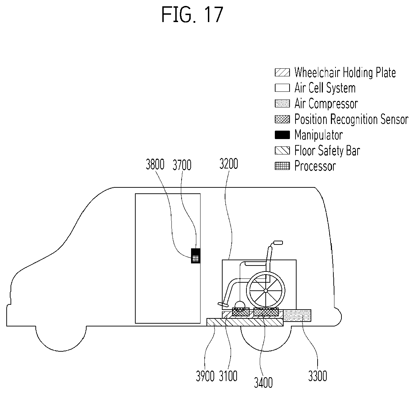

FIG. 17 is a diagram illustrating a wheelchair storage system according to a second embodiment of the present disclosure.

Referring to FIG. 17, a wheelchair storage system may include a wheelchair holding plate 3100, an air cell system 3200, an air compressor 3300, a position recognition sensor 3400, a safety bar 3900, a manipulator 3700, and a processor 3800.

The position recognition sensor 3400 may be embedded in the wheelchair holding plate 3100 and the wheelchair holding plate 3100 may include a fastener arranged on the surface thereof so as to be manually engaged with the wheels. The air cell system 3200 may be disposed on one side of the wheelchair holding plate 3100 to hold the wheelchair. The air cell system 3200 may be supplied with air via an air compressor 3300 disposed at the rear of the wheelchair holding plate 3100.

The position recognition sensor 3400 may be configured to recognize a wheelchair in the vehicle 1000, and may be a sensor that determines the position of the wheelchair in the vehicle.

The safety bar 3900 may be disposed on the floor of the vehicle and may be raised from the floor. When the safety bar 3900 is raised from the floor of the vehicle to the front of the wheelchair user, it may serve as a front safety bar for the wheelchair user.

The manipulator 3700 may be disposed on one side of the vehicle entrance. The manipulator 3700 may include a command button to turn the air cell system 3200 ON/OFF. The manipulator 3700 may include command buttons to raise and lower the safety bar 3900.

The processor 3800 may control at least one of the wheelchair holding plate 3100, the air cell system 3200, the air compressor 3300, the position recognition sensor 3400, the manipulator 3700, or the safety bar 3900.

When the caregiver and the wheelchair enter the vehicle and the wheelchair is positioned on the wheelchair holding plate 3100, the processor 3800 may control at least one of the wheelchair lift system 3500, the air cell system 3200, or the safety bar 3900 in response to a control signal received from the manipulator 3700.

When the position recognition sensor 3400 disposed on the wheelchair holding plate 3100 recognizes the position of the wheelchair, the processor 3800 may determine whether both the front and rear wheels of the wheelchair are recognized by the position recognition sensor 3400. When both the front and rear wheels of the wheelchair are on the sensor, the processor 3800 may receive a control signal from the position recognition sensor 3400.

When the processor 3800 activates the air cell system 3200, the wheelchair may be manually secured to the wheelchair holding plate 3100 by the caregiver.

When the wheelchair engaged with the lift 3510 is manually secured by the caregiver, the processor 3800 may determine whether the wheelchair is moving.

When there is no movement of the wheelchair, the processor 3800 may receive an air cell system control signal from the manipulator 3700, and cause the air cell system 3200 to operate.

The processor 3800 may receive a safety bar control signal from the manipulator 3700 and control the safety bar 3900 to move to the front of the wheelchair.

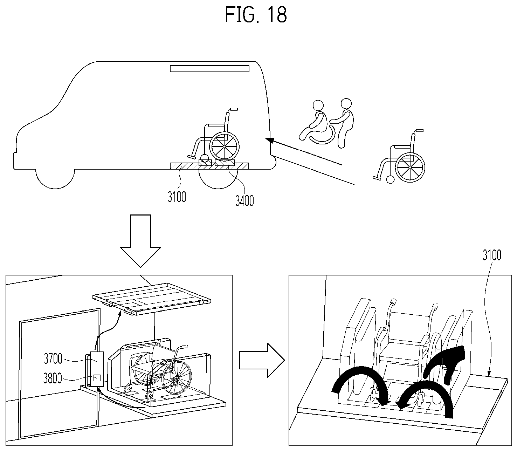

FIG. 18 illustrates the operation of loading a wheelchair into a vehicle according to embodiments of the present disclosure.

Referring to FIG. 18, a wheelchair-bound disabled person may enter the vehicle 1000 accompanied by a caregiver. The caregiver may open the vehicle tailgate and move the wheelchair into the vehicle. Once the wheelchair is moved into the vehicle, the position of the wheelchair may be recognized by the position recognition sensor 3400 disposed on the wheelchair holding plate 3100, and the position recognition sensor 3400 may transmit a wheelchair entry signal to the processor 3800. The processor 3800 may transmit a wheelchair lift control signal based on the wheelchair entry signal.

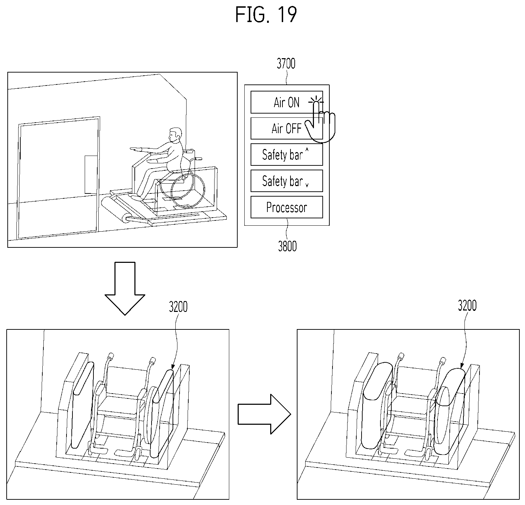

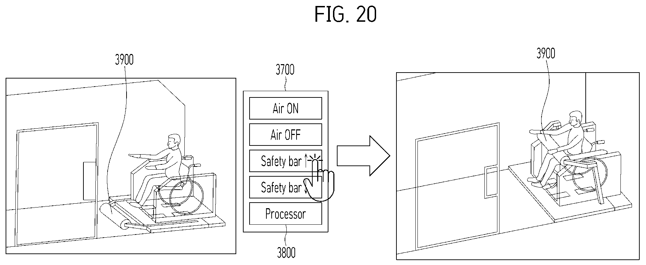

FIGS. 19 and 20 illustrate the operation of a wheelchair storage system according to embodiments of the present disclosure.

Referring to FIG. 19, a wheelchair may be loaded into the vehicle 1000, and a caregiver may enter the vehicle. Subsequently, the wheels of the wheelchair may be engaged with the fastener on the wheelchair holding plate 3100 by the caregiver.

The air cell system 3200 may be operated using the manipulator 3700 disposed at the entrance to the vehicle. For example, the manipulator 3700 may include an air ON button to inflate the air cell system 3200, an air OFF button to deflate the air cell system 3200, an up button to raise the lift 3510, and a down button to lower the lift 3510.

When the air ON button to inflate the air cell system 3200 is pressed by the caregiver after the wheelchair has risen into the air, the volume of the air cell may be increased to reliably hold the raised lift and the wheelchair.

Referring to FIG. 20, when the safety bar 3900 is operated by the caregiver, the safety bar 3900 may be moved to a position for engagement with the wheelchair. In other words, when an up button to raise the safety bar 3900 is pressed on the manipulator 3700, the safety bar 3900 may rise from the floor.

When the caregiver operates the safety bar 3900, the safety bar 3900 may be moved to a position for securing the wheelchair. For example, the safety bar 3900 may be moved to be positioned in front of the wheelchair-bound disabled person. Thereby, the safety bar 3900 may protect the wheelchair and the wheelchair-bound disabled person.

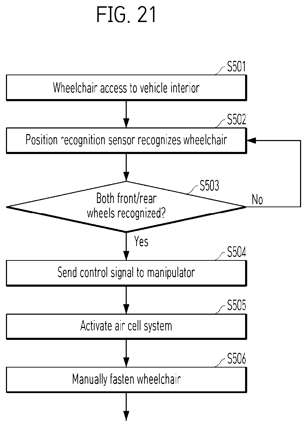

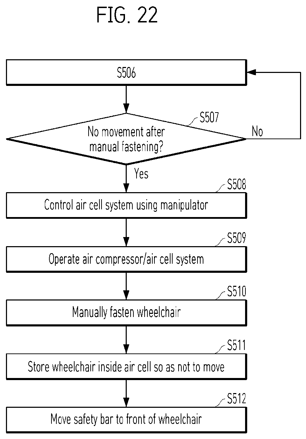

FIGS. 21 and 22 are flowcharts illustrating the operation of loading a wheelchair into a vehicle according to embodiments of the present disclosure.

Referring to FIGS. 21 and 22, when a wheelchair is pushed by a caregiver from the outside to move into a vehicle (S501), the wheelchair storage system 3000 may receive a wheelchair entry signal from the position recognition sensor 3400 disposed on the wheelchair holding plate 3100 (S502).

After operation S502, the wheelchair storage system 3000 may determine, based on the wheelchair entry signal, whether both the front and rear wheels of the wheelchair are recognized by the position recognition sensor 3400 (S503).

After operation S503, when both the front and rear wheels of the wheelchair are recognized by the position recognition sensor 3400 (Yes in S503), the wheelchair storage system 3000 may send an air cell system activation signal from the processor 3800 (S504).

After operation S504, the wheelchair storage system 3000 may receive the air cell system activation signal and control the air cell system 3200 to be activated (S505).

After operation S505, the wheelchair and the fastener are manually fastened by the caregiver in the vehicle (S506), and the wheelchair storage system 3000 may determine whether the wheelchair and the fastener have not moved since the manual fastening (S507).

After operation S507, when the wheelchair and the fastener have not moved since manual engagement (Yes in S507), the wheelchair storage system 3000 may receive an air cell system control signal (S508), and operate the air compressor 3300 and the air cell system 3200 (S509).

After operation S509, the wheelchair storage system 3000 may store the lift and wheelchair inside the air cell so as not to move (S510).

After operation S510, the wheelchair storage system 3000 may receive a safety bar control signal (S511), and control the safety bar 3900 to move to a position to protect the wheelchair occupant (S512).

In other words, the technical ideas of the present disclosure are applicable to an entire autonomous vehicle or only to some components in the autonomous vehicle. The scope of the present disclosure is to be determined based on the appended claims.

In another aspect of the present disclosure, the above-described proposals or operations of the disclosure may be provided in the form of code that can be implemented, performed, or executed by a "computer" (a broad concept that includes a system on chip (SoC) or microprocessor, etc.), or an application, computer-readable storage medium, or computer program product storing or including the code, which is also within the scope of the present disclosure.

A detailed description of preferred embodiments of the disclosure has been provided above to enable those skilled in the art to implement and practice the disclosure. Although the disclosure has been described above with reference to preferred embodiments of the disclosure, it will be understood by those skilled in the art that various modifications and changes can be made to the disclosure without departing from the scope of the invention as defined by the appended claims.

Accordingly, the disclosure is not intended to be limited to the embodiments described herein, but rather to provide the broadest possible scope as defined by the appended claims.

## Claims

1. A wheelchair storage system comprising:
a wheelchair holding plate (2100, 3100) configured to be disposed inside a vehicle (1000); and
a position recognition sensor (2200, 3400) disposed on the wheelchair holding plate (2100, 3100);
**characterized in that** the wheelchair storage system further comprises:
a floor safety bar (2400) configured to be disposed on a floor of the vehicle (1000) to move up towards a wheelchair;
a roof safety bar (2500) configured to be disposed on a roof of the vehicle (1000) to move down towards the wheelchair;
a back and forth moving seat (2300) configured to be disposed on a rail disposed on a side of the vehicle;
a manipulator (2600, 3700) disposed in the back and forth moving seat (2300) and configured to input commands to at least one of the floor safety bar (2400), the roof safety bar (2500), or the back and forth moving seat (2300); and
a processor (2700, 3800) configured to control the wheelchair holding plate (2100, 3100), the floor safety bar (2400), the roof safety bar (2500), and the back and forth moving seat (2300),
wherein the processor (2700, 3800) is configured to:
control the wheelchair holding plate (2100, 3100) to secure the wheelchair to the wheelchair holding plate (2100, 3100) when a caregiver and the disabled person enter the vehicle;
control at least one of the floor safety bar (2400) or the roof safety bar (2500) in response to a control signal received from the manipulator (2600, 3700) disposed in the back and forth moving seat (2300) with the caregiver seated on the back and forth moving seat (2300); and
control at least one of the back and forth moving seat (2300).

2. The wheelchair storage system of claim 1, wherein the processor (2700, 3800) is configured to:
cause the position recognition sensor (2200, 3400) disposed on the wheelchair holding plate (2100, 3100) to recognize a wheelchair entry position of the wheelchair;
determine whether both front and rear wheels of the wheelchair are recognized by the position recognition sensor (2200, 3400);
transmit a control signal to the wheelchair holding plate (2100, 3100) in response to a determination that both the front and rear wheels of the wheelchair are recognized by the position recognition sensor (2200, 3400); and
cause the wheelchair holding plate (2100, 3100) to rotate rearward to secure the wheelchair.

3. The wheelchair storage system of claim 2, wherein the wheelchair holding plate (2100, 3100) is configured to rotate rearward at an angle ranging from 1 to 5 degrees.

4. The wheelchair storage system of any one of claims 1 to 3, wherein the processor (2700, 3800) is configured to:
receive a floor safety bar up signal from the manipulator (2600, 3700);
control the floor safety bar (2400) to rise in response to the floor safety bar up signal; and
control the floor safety bar (2400) to move to a preset backrest position.

5. The wheelchair storage system of claim 4, wherein the processor (2700, 3800) is further configured to:
receive the floor safety bar up signal when the floor safety bar (2400) has been moved to the preset backrest position; and
control the floor safety bar (2400) to move to a position in front of the wheelchair upon receiving the floor safety bar up signal.

6. The wheelchair storage system of claim 4 or 5, wherein the processor (2700, 3800) is configured to:
receive a back and forth moving seat movement signal when the floor safety bar (2400) is disposed in front of the wheelchair; and
control the back and forth moving seat (2300) to move to a side of the wheelchair in response to the back and forth moving seat movement signal.

7. The wheelchair storage system of any one of claims 4 to 6, further comprising a pop-up seat configured to rise from the floor of the vehicle (1000),
wherein the processor (2700, 3800) is further configured to:
receive a roof safety bar (2500) down signal when the floor safety bar (2400) has been moved to the backrest position;
control the roof safety bar (2500) to move to a position in front of the wheelchair upon receiving the roof safety bar down signal,
receive a pop-up seat movement signal when the roof safety bar (2500) is disposed in front of the wheelchair; and
control the pop-up seat (2800) to rise in response to the pop-up seat movement signal,
wherein the processor (2700, 3800) causes the pop-up seat (2800) to move to a backrest position corresponding to a position of the floor safety bar (2400).

8. A wheelchair storage system comprising:
a wheelchair holding plate (2100, 3100) configured to be disposed inside a vehicle (1000); and
a position recognition sensor (2200, 3400) disposed on the wheelchair holding plate (2100, 3100);
**characterized in that** the wheelchair storage system further comprises:
a safety bar (3900) configured to be disposed on a floor of the vehicle (1000) to move up towards a position in front of a wheelchair;
a wheelchair lift system (3500) configured to be disposed on a roof of the vehicle (1000) and comprising a lift to raise the wheelchair into the air;
an air cell system (3200) comprising an air cell configured to hold the wheelchair in place when inflated;
a manipulator (2600, 3700) disposed in the air cell system (3200) to input commands to at least one of the safety bar (3900), the wheelchair lift system (3500), or the air cell system (3200); and
a processor (2700, 3800) configured to control the holding plate, the safety bar (3900), and the air cell system (3200),
wherein, when a caregiver and the wheelchair enter the vehicle (1000), and the wheelchair is positioned on the wheelchair holding plate (2100, 3100), the processor (2700, 3800) is configured to control at least one of the wheelchair lift system (3500), the air cell system (3200), or the safety bar (3900) in response to a control signal received from the manipulator (2600, 3700),
wherein the processor (2700, 3800) is configured to:
cause the position recognition sensor (2200, 3400) disposed on the wheelchair holding plate (2100, 3100) to recognize a position of the wheelchair;
determine whether both front and rear wheels of the wheelchair are recognized by the position recognition sensor (2200, 3400); and
receive, from the position recognition sensor (2200, 3400), an activation signal for at least one of the wheelchair lift system (3500) or the air cell system (3200) in response to a determination that both the front wheels and the rear wheels of the wheelchair are recognized by the position recognition sensor (2200, 3400).

9. The wheelchair storage system of claim 8, wherein, when the lift is engaged with the wheelchair with the wheelchair lift system (3500) activated, the processor (2700, 3800) is configured to cause a built-in sensor disposed on the lift to recognize the engaged wheelchair.

10. The wheelchair storage system of claim 8 or 9, wherein, when the wheelchair engaged with the lift is manually secured by the caregiver, the processor (2700, 3800) is configured to determine whether the wheelchair moves.

11. The wheelchair storage system of any one of claims 8 to 10, wherein, when the wheelchair does not move, the processor (2700, 3800) is configured to cause the lift to rise upon receiving a lift up signal from the manipulator (2600, 3700).

12. The wheelchair storage system of any one of claims 8 to 11, wherein the processor (2700, 3800) is configured to control the air cell system (3200), upon receiving an air cell system control signal from the manipulator (2600, 3700).

13. The wheelchair storage system of any one of claims 8 to 12, wherein, when the air cell system (3200) is activated, the wheelchair is manually secured to the wheelchair holding plate (2100, 3100) by the caregiver,
wherein the processor (2700, 3800) is configured to:
determine, when the wheelchair engaged with the lift is manually secured by the caregiver, whether the wheelchair moves; and
when the wheelchair does not move, operate the air cell system (3200) upon receiving an air cell system control signal from the manipulator (2600, 3700).

14. The wheelchair storage system of claim 13, wherein the processor (2700, 3800) is configured to control the safety bar (3900) to move to a position in front of the wheelchair upon receiving a safety bar control signal from the manipulator (2600, 3700).

## Patentansprüche

1. Rollstuhlaufbewahrungssystem, umfassend:
eine Rollstuhlhalteplatte (2100, 3100), die zur Anordnung in einem Fahrzeug (1000) eingerichtet ist; und
einen Positionserkennungssensor (2200, 3400), der an der Rollstuhlhalteplatte (2100, 3100) angeordnet ist;
**dadurch gekennzeichnet, dass** das Rollstuhlaufbewahrungssystem weiterhin umfasst:
einen Bodensicherheitsbügel (2400), der so eingerichtet ist, dass er auf einem Boden des Fahrzeugs (1000) angeordnet werden kann, um sich nach oben in Richtung eines Rollstuhls zu bewegen;
einen Dachsicherheitsbügel (2500), der so eingerichtet ist, dass er an einem Dach des Fahrzeugs (1000) angeordnet werden kann, um sich nach unten in Richtung des Rollstuhls zu bewegen;
einen vor- und zurückbeweglichen Sitz (2300), der so eingerichtet ist, dass er auf einer Schiene an einer Seite des Fahrzeugs angeordnet werden kann;
einen Manipulator (2600, 3700), der im vor- und zurückbeweglichen Sitz (2300) angeordnet ist und dazu eingerichtet ist, Befehle an mindestens einen von dem Bodensicherheitsbügel (2400), dem Dachsicherheitsbügel (2500) oder dem vor- und zurückbeweglichen Sitz (2300) einzugeben; und
einen Prozessor (2700, 3800), der dazu eingerichtet ist, die Rollstuhlhalteplatte (2100, 3100), den Bodensicherheitsbügel (2400), den Dachsicherheitsbügel (2500) und den vor- und zurückbeweglichen Sitz (2300) zu steuern,
wobei der Prozessor (2700, 3800) eingerichtet ist zum:
Steuern der Rollstuhlhalteplatte (2100, 3100), um den Rollstuhl an der Rollstuhlhalteplatte (2100, 3100) zu sichern, wenn eine Pflegekraft und die behinderte Person das Fahrzeug betreten;
Steuern mindestens eines von dem Bodensicherheitsbügel (2400) oder dem Dachsicherheitsbügel (2500) als Reaktion auf ein vom Manipulator (2600, 3700) empfangenes Steuersignal, der im vor- und zurückbeweglichen Sitz (2300) angeordnet ist, während die Pflegekraft auf dem vor- und zurückbeweglichen Sitz (2300) sitzt; und
Steuern mindestens eines des vor- und zurückbeweglichen Sitzes (2300).

2. Rollstuhlaufbewahrungssystem nach Anspruch 1, wobei der Prozessor (2700, 3800) eingerichtet ist zum:
Veranlassen, dass der an der Rollstuhlhalteplatte (2100, 3100) angeordnete Positionserkennungssensor (2200, 3400) eine Rollstuhleinstiegsposition des Rollstuhls erkennt;
Bestimmen, ob sowohl die Vorder- als auch die Hinterräder des Rollstuhls vom Positionserkennungssensor (2200, 3400) erkannt werden;
Senden eines Steuersignals an die Rollstuhlhalteplatte (2100, 3100) als Reaktion auf eine Bestimmung, dass sowohl die Vorder- als auch die Hinterräder des Rollstuhls vom Positionserkennungssensor (2200, 3400) erkannt werden; und
Veranlassen, dass die Rollstuhlhalteplatte (2100, 3100) sich nach hinten dreht, um den Rollstuhl zu sichern.

3. Rollstuhlaufbewahrungssystem nach Anspruch 2, wobei die Rollstuhlhalteplatte (2100, 3100) so eingerichtet ist, dass sie sich in einem Winkel von 1 bis 5 Grad nach hinten dreht.

4. Rollstuhlaufbewahrungssystem nach einem der Ansprüche 1 bis 3, wobei der Prozessor (2700, 3800) eingerichtet ist zum:
Empfangen eines Signals zum Hochfahren des Bodensicherheitsbügels vom Manipulator (2600, 3700);
Steuern des Bodensicherheitsbügels (2400), sodass dieser als Reaktion auf das Signal zum Hochfahren des Bodensicherheitsbügels hochfährt; und
Steuern des Bodensicherheitsbügels (2400), um eine voreingestellte Rückenlehnenposition einzunehmen.

5. Rollstuhlaufbewahrungssystem nach Anspruch 4, wobei der Prozessor (2700, 3800) weiterhin eingerichtet ist zum:
Empfangen des Signals zum Hochfahren des Bodensicherheitsbügels, wenn der Bodensicherheitsbügel (2400) in die voreingestellte Rückenlehnenposition bewegt wurde; und
Steuern des Bodensicherheitsbügels (2400), damit er sich nach Empfang des Signals zum Hochfahren des Bodensicherheitsbügels in eine Position vor dem Rollstuhl bewegt.

6. Rollstuhlaufbewahrungssystem nach Anspruch 4 oder 5, wobei der Prozessor (2700, 3800) eingerichtet ist zum:
Empfangen eines Signals zur Bewegung des vor- und zurückbeweglichen Sitzes, wenn sich der Bodensicherheitsbügel (2400) vor dem Rollstuhl befindet; und
Steuern des vor- und zurückbeweglichen Sitzes (2300), um ihn als Reaktion auf das Signal zur Bewegung des vor- und zurückbeweglichen Sitzes zu einer Seite des Rollstuhls zu bewegen.

7. Rollstuhlaufbewahrungssystem nach einem der Ansprüche 4 bis 6, weiterhin umfassend einen ausklappbaren Sitz, der so eingerichtet ist, dass er vom Boden des Fahrzeugs (1000) hochfährt,
wobei der Prozessor (2700, 3800) weiterhin eingerichtet ist zum:
Empfangen eines Signals zum Herunterlassen des Dachsicherheitsbügels (2500), wenn der Bodensicherheitsbügel (2400) in die Rückenlehnenposition bewegt wurde;
Steuern des Dachsicherheitsbügels (2500), um ihn nach Empfang des Signals zum Herunterlassen des Dachsicherheitsbügels in eine Position vor dem Rollstuhl zu bewegen,
Empfangen eines Signals zur Bewegung des ausklappbaren Sitzes, wenn sich der Dachsicherheitsbügel (2500) vor dem Rollstuhl befindet; und
Steuern des Aufklappsitzes (2800), sodass dieser als Reaktion auf das Signal zur Bewegung des ausklappbaren Sitzes hochfährt,
wobei der Prozessor (2700, 3800) veranlasst, dass sich der aufklappbare Sitz (2800) in eine Rückenlehnenposition bewegt, die einer Position des Bodensicherheitsbügels (2400) entspricht.

8. Rollstuhlaufbewahrungssystem, umfassend:
eine Rollstuhlhalteplatte (2100, 3100), die zur Anordnung in einem Fahrzeug (1000) eingerichtet ist; und
einen Positionserkennungssensor (2200, 3400), der an der Rollstuhlhalteplatte (2100, 3100) angeordnet ist;
**dadurch gekennzeichnet, dass** das Rollstuhlaufbewahrungssystem weiterhin umfasst:
einen Sicherheitsbügel (3900), der so eingerichtet ist, dass er auf einem Boden des Fahrzeugs (1000) angeordnet ist, um sich nach oben in Richtung einer Position vor einem Rollstuhl zu bewegen;
ein Rollstuhlliftsystem (3500), das so eingerichtet ist, dass es an einem Dach des Fahrzeugs (1000) angeordnet ist und einen Lift zum Anheben des Rollstuhls in die Luft umfasst;
ein Luftzellensystem (3200), das eine Luftzelle umfasst, die so eingerichtet ist, dass sie den Rollstuhl an seinem Platz hält, wenn sie aufgeblasen ist;
einen Manipulator (2600, 3700), der im Luftzellensystem (3200) angeordnet ist, um Befehle an mindestens einen von dem Sicherheitsbügel (3900), dem Rollstuhlliftsystem (3500) oder dem Luftzellensystem (3200) einzugeben; und
einen Prozessor (2700, 3800), der dazu eingerichtet ist, die Halteplatte, den Sicherheitsbügel (3900) und das Luftzellensystem (3200) zu steuern,
wobei, wenn eine Pflegekraft und der Rollstuhl das Fahrzeug (1000) betreten und der Rollstuhl auf der Rollstuhlhalteplatte (2100, 3100) positioniert wird, der Prozessor (2700, 3800) so eingerichtet ist, dass er als Reaktion auf ein vom Manipulator (2600, 3700) empfangenes Steuersignal mindestens eines von dem Rollstuhlliftsystem (3500), dem Luftzellensystem (3200) oder dem Sicherheitsbügel (3900) steuert,
wobei der Prozessor (2700, 3800) eingerichtet ist zum:
Veranlassen, dass der an der Rollstuhlhalteplatte (2100, 3100) angeordnete Positionserkennungssensor (2200, 3400) eine Position des Rollstuhls erkennt;
Bestimmen, ob sowohl Vorder- als auch Hinterräder des Rollstuhls vom Positionserkennungssensor (2200, 3400) erkannt werden; und
Empfangen eines Aktivierungssignals vom Positionserkennungssensor (2200, 3400) für mindestens eines von dem Rollstuhlliftsystem (3500) oder dem Luftzellensystem (3200) als Reaktion auf eine Bestimmung, dass sowohl die Vorderräder als auch die Hinterräder des Rollstuhls vom Positionserkennungssensor (2200, 3400) erkannt werden.

9. Rollstuhlaufbewahrungssystem nach Anspruch 8, wobei, wenn der Lift bei aktiviertem Rollstuhlliftsystem (3500) mit dem Rollstuhl verbunden ist, der Prozessor (2700, 3800) dazu eingerichtet ist, einen am Lift angeordneten eingebauten Sensor zu veranlassen, den verbundenen Rollstuhl zu erkennen.

10. Rollstuhlaufbewahrungssystem nach Anspruch 8 oder 9, wobei, wenn der mit dem Lift verbundene Rollstuhl manuell durch die Pflegekraft gesichert wird, der Prozessor (2700, 3800) dazu eingerichtet ist, zu bestimmen, ob sich der Rollstuhl bewegt.

11. Rollstuhlaufbewahrungssystem nach einem der Ansprüche 8 bis 10, wobei, wenn der Rollstuhl sich nicht bewegt, der Prozessor (2700, 3800) dazu eingerichtet ist, den Lift zu veranlassen, bei Empfang eines Signals zum Hochfahren vom Manipulator (2600, 3700) hochzufahren.

12. Rollstuhlaufbewahrungssystem nach einem der Ansprüche 8 bis 11, wobei der Prozessor (2700, 3800) dazu eingerichtet ist, das Luftzellensystem (3200) nach Empfang eines Luftzellensystem-Steuersignals vom Manipulator (2600, 3700) zu steuern.

13. Rollstuhlaufbewahrungssystem nach einem der Ansprüche 8 bis 12, wobei der Rollstuhl, wenn das Luftzellensystem (3200) aktiviert wird, von der Pflegekraft manuell an der Rollstuhlhalteplatte (2100, 3100) gesichert wird,
wobei der Prozessor (2700, 3800) eingerichtet ist zum:
Bestimmen, ob sich der Rollstuhl bewegt, wenn der mit dem Lift verbundene Rollstuhl von der Pflegekraft manuell gesichert wird; und
wenn sich der Rollstuhl nicht bewegt, Betätigen des Luftzellensystems (3200) nach Empfang eines Luftzellensystem-Steuersignals vom Manipulator (2600, 3700).

14. Rollstuhlaufbewahrungssystem nach Anspruch 13, wobei der Prozessor (2700, 3800) dazu eingerichtet ist, den Sicherheitsbügel (3900) so zu steuern, dass er sich nach Empfang eines Sicherheitsbügel-Steuersignals vom Manipulator (2600, 3700) in eine Position vor dem Rollstuhl bewegt.

## Revendications

1. Système de rangement de fauteuil roulant comprenant:
une plaque de retenue de fauteuil roulant (2100, 3100) conçue pour être disposée à l'intérieur d'un véhicule (1000); et
un capteur de reconnaissance de position (2200, 3400) disposé sur la plaque de retenue de fauteuil roulant (2100, 3100);
**caractérisé en ce que** le système de rangement de fauteuil roulant comprend en outre:
une barre de sécurité au plancher (2400) conçue pour être disposée sur le plancher du véhicule (1000) et se déplacer vers le haut en direction d'un fauteuil roulant;
une barre de sécurité de toit (2500) conçue pour être disposée sur le toit du véhicule (1000) et descendre vers le fauteuil roulant;
un siège (2300) se déplaçant d'avant en arrière, conçu pour être disposé sur un rail situé sur un côté du véhicule;
un manipulateur (2600, 3700) disposé dans le siège se déplaçant d'avant en arrière (2300) et conçu pour donner des instructions à au moins l'un parmi la barre de sécurité au plancher (2400), la barre de sécurité de toit (2500) ou le siège se déplaçant d'avant en arrière (2300); et
un processeur (2700, 3800) configuré pour commander la plaque de retenue de fauteuil roulant (2100, 3100), la barre de sécurité au plancher (2400), la barre de sécurité de toit (2500) et le siège se déplaçant d'avant en arrière (2300),
dans lequel le processeur (2700, 3800) est conçu pour:
amener la plaque de retenue de fauteuil roulant (2100, 3100) à fixer le fauteuil roulant à la plaque de retenue de fauteuil roulant (2100, 3100) lorsqu'un soignant et la personne handicapée montent dans le véhicule;
commander au moins l'un parmi la barre de sécurité au plancher (2400), la barre de sécurité de toit (2500) en réponse à un signal de commande reçu en provenance du manipulateur (2600, 3700) disposé dans le siège se déplaçant d'avant en arrière (2300) alors que le soignant est assis sur le siège se déplaçant d'avant en arrière (2300); et
commander au moins l'un parmi le siège se déplaçant d'avant en arrière (2300).

2. Système de rangement de fauteuil roulant selon la revendication 1, dans lequel le processeur (2700, 3800) est configuré pour:
amener le capteur de reconnaissance de position (2200, 3400) disposé sur la plaque de retenue de fauteuil roulant (2100, 3100) à reconnaitre une position d'entrée du fauteuil roulant;
déterminer si les roues avant et arrière du fauteuil roulant sont reconnues par le capteur de reconnaissance de position (2200, 3400);
transmettre un signal de commande à la plaque de retenue de fauteuil roulant (2100, 3100) en réponse à la détermination que les roues avant et arrière du fauteuil roulant sont reconnues par le capteur de reconnaissance de position (2200, 3400); et
faire tourner la plaque de retenue de fauteuil roulant (2100, 3100) vers l'arrière pour fixer le fauteuil roulant.

3. Système de rangement de fauteuil roulant selon la revendication 2, dans lequel la plaque de retenue de fauteuil roulant (2100, 3100) est conçue pour pivoter vers l'arrière selon un angle compris entre 1 et 5 degrés.

4. Système de rangement de fauteuil roulant selon l'une quelconque des revendications 1 à 3, dans lequel le processeur (2700) est configuré pour:
recevoir en provenance du manipulateur (2600, 3700) un signal de montée de barre de sécurité au plancher;
amener la barre de sécurité au sol (2400) en réponse au signal de montée de la barre de sécurité au sol ; et
commander la barre de sécurité au plancher (2400) à se déplacer dans une position préréglée du dossier.

5. Système de rangement de fauteuil roulant selon la revendication 4, dans lequel le processeur (2700, 3800) est en outre configuré pour:
recevoir le signal de montée de barre de sécurité au plancher lorsque la barre de sécurité au plancher (2400) a été déplacée dans la position préréglée du dossier; et
amener la barre de sécurité au plancher (2400) à se déplacer dans une position située devant le fauteuil roulant après avoir reçu le signal de montée de barre de sécurité au plancher.

6. Système de rangement de fauteuil roulant selon la revendication 4 ou 5, dans lequel le processeur (2700, 3800) est conçu pour:
recevoir un signal de mouvement de siège se déplaçant d'avant en arrière lorsque la barre de sécurité au plancher (2400) est placée devant le fauteuil roulant; et
amener le siège se déplaçant d'avant en arrière (2300) à se déplacer vers un côté du fauteuil roulant en réponse au signal de déplacement de siège se déplaçant d'avant en arrière.

7. Système de rangement de fauteuil roulant selon l'une quelconque des revendications 4 à 6, comprenant en outre un siège escamotable qui peut être replié dans le plancher du véhicule (1000),
dans lequel le processeur (2700, 3800) est en outre configuré pour:
recevoir le signal de descente de barre de sécurité au plancher (2500) lorsque la barre de sécurité au plancher (2400) a été déplacée dans la position préréglée du dossier;
amener la barre de sécurité de toit (2500) à se déplacer dans une position située devant le fauteuil roulant après avoir reçu le signal de descente de barre de sécurité de toit.
recevoir un signal de mouvement de siège escamotable lorsque la barre de sécurité de toit (2500) est placée devant le fauteuil roulant; et
amener le siège escamotable (2800) à se déplier en réponse au signal de mouvement de siège escamotable,
dans lequel le processeur (2700, 3800) amène le siège escamotable (2800) à se déplacer dans une position de dossier correspondant à une position de la barre de sécurité au plancher (2400).

8. Système de rangement de fauteuil roulant comprenant:
une plaque de retenue de fauteuil roulant (2100, 3100) conçue pour être disposée à l'intérieur d'un véhicule (1000); et
un capteur de reconnaissance de position (2200, 3400) disposé sur la plaque de retenue de fauteuil roulant (2100, 3100);
**caractérisé en ce que** le système de rangement de fauteuil roulant comprend en outre:
une barre de sécurité (3900) conçue pour être disposée sur le plancher du véhicule (1000) et se déplacer vers le haut vers une position devant le fauteuil roulant;
un système de levage de fauteuil roulant (3500) conçu pour être disposé sur le toit du véhicule (1000) et comprenant un élévateur pour soulever le fauteuil roulant;
un système de cellules d'air (3200) comprenant une cellule d'air conçue pour retenir le fauteuil roulant en place lorsqu'elle est gonflée;
un manipulateur (2600, 3700) disposé dans le système de cellules d'air (3200) pour donner des ordres à au moins l'un des éléments suivants : la barre de sécurité (3900), le système de levage de fauteuil roulant (3500) ou le système de cellules d'air (3200) ; et
un processeur (2700, 3800) configuré pour commander la plaque de retenue, la barre de sécurité (3900) et le système de cellules d'air (3200),
dans lequel, lorsqu'un soignant et le fauteuil roulant montent dans le véhicule (1000), et que le fauteuil roulant est positionné sur la plaque de retenue de fauteuil roulant (2100, 3100), le processeur (2700, 3800) est configuré pour commander l'au moins un parmi le système de levage de fauteuil roulant (3500), le système de cellules d'air (3200) ou la barre de sécurité (3900) en réponse à un signal de commande reçu en provenance du manipulateur (2600, 3700),
dans lequel le processeur (2700, 3800) est conçu pour:
amener le capteur de reconnaissance de position (2200, 3400) disposé sur la plaque de retenue de fauteuil roulant (2100, 3100) à reconnaître une position du fauteuil roulant;
déterminer si les roues avant et arrière du fauteuil roulant sont reconnues par le capteur de reconnaissance de position (2200, 3400); et
recevoir, en provenance du capteur de reconnaissance de position (2200, 3400), un signal d'activation pour au moins l'un parmi le système de levage de fauteuil roulant (3500) ou de cellules d'air (3200) en réponse à la détermination que les roues avant et les roues arrière du fauteuil roulant sont reconnues par le capteur de reconnaissance de position (2200, 3400).

9. Système de rangement de fauteuil roulant selon la revendication 8, dans lequel, lorsque l'élévateur est contact avec le fauteuil roulant et que le système de levage de fauteuil roulant (3500) est activé, le processeur (2700, 3800) est configuré pour amener un capteur intégré disposé sur l'élévateur à reconnaître le fauteuil roulant.

10. Système de rangement de fauteuil roulant selon la revendication 8 ou 9, dans lequel, lorsque le fauteuil roulant en contact avec l'élévateur est fixé manuellement par le soignant, le processeur (2700, 3800) est configuré pour déterminer si le fauteuil roulant bouge.

11. Système de rangement de fauteuil roulant selon l'une quelconque des revendications 8 à 10, dans lequel, lorsque le fauteuil roulant ne bouge pas, le processeur (2700, 3800) est configuré pour faire monter l'élévateur après avoir reçu un signal de montée en provenance du manipulateur (2600, 3700).

12. Système de rangement de fauteuil roulant selon l'une quelconque des revendications 8 à 11, dans lequel le processeur (2700, 3800) est configuré pour commander le système de cellules d'air (3200), à réception d'un signal de commande du système de cellules d'air provenant du manipulateur (2600, 3700).

13. Système de rangement de fauteuil roulant selon l'une quelconque des revendications 8 à 12, dans lequel, lorsque le système de cellules d'air (3200) est activé, le fauteuil roulant est fixé manuellement à la plaque de retenue de fauteuil roulant (2100, 3100) par le soignant,
dans lequel le processeur (2700, 3800) est conçu pour:
déterminer, lorsque le fauteuil roulant en contact avec l'élévateur est fixé manuellement par le soignant, si le fauteuil roulant bouge; et
lorsque le fauteuil roulant ne bouge pas, faire fonctionner le système de cellules d'air (3200) à réception d'un signal de commande de système de cellules d'air provenant du manipulateur (2600, 3700).

14. Système de rangement de fauteuil roulant selon la revendication 13, dans lequel le processeur (2700, 3800) est configuré pour amener la barre de sécurité (3900) à se déplacer dans une position située devant le fauteuil roulant à réception d'un signal de commande de barre de sécurité en provenance du manipulateur (2600, 3700).
